# EUROPÄISCHE PATENTSCHRIFT

(11) **EP 1 719 661 B1**
(45) Veröffentlichungstag und Bekanntmachung des Hinweises auf die Patenterteilung: **04.04.2018**
(21) Anmeldenummer: 06009226.9
(22) Anmeldetag: 04.05.2006
(51) Int. Cl.: B60P 1/44

(54) **Hubladebühne und Verfahren zum Ein- und Ausfahren derselben**
Tailgate lift and procedure for extending and retracting the same
Plate-forme de hayon et procédé pour faire sortir et rentrer la même

(30) Priorität: 04.05.2005 DE 102005021352
(43) Veröffentlichungstag der Anmeldung: 08.11.2006
(73) Patentinhaber: Palfinger Tail Lifts GmbH, 27777 Ganderkesee (DE)
(72) Erfinder: Bley, Hubert, 49681 Garrel (DE)
(74) Vertreter: Möller, Friedrich

(56) Entgegenhaltungen:
- EP-A- 0 503 157
- EP-A- 0 773 136
- EP-A- 1 193 122
- DE-A1- 3 345 589
- DE-A1- 4 430 437
- JP-A- 2001 163 595
- JP-A- 2005 231 425

## Beschreibung

Die Erfindung betrifft ein Verfahren zum Ein- und Ausfahren einer zusammenklappbaren Ladeplattform einer Hubladebühne gemäß dem Oberbegriff des Anspruchs 1. Die Erfindung betrifft des Weiteren eine Hubladebühne gemäß dem Oberbegriff des Anspruchs 5.

Hubladebühnen dienen dazu, das Be- und Entladen von Fahrzeugen mit insbesondere schweren Gegenständen zu erleichtern. Eine solche Hubladebühne verfügt über eine vorzugsweise an der Rückseite eines Aufbaus des Fahrzeugs schwenk-, heb- und senkbar angelenkte Ladeplattform.

Die Erfindung befasst sich mit einer besonderen Art der Hubladebühne. Diese ist in ihrem Ruhezustand unter einen rückwärtigen Bereich des Fahrzeugs, in dem sie angebracht ist, unterzieh- und/oder faltbar. Im Fachjargon wird eine Hubladebühne dieser Art als "unterziehbare" oder "unterfaltbare" Hubladebühne bezeichnet. Die Ladeplattform einer solchen unterziehbaren Hubladebühne ist, damit sie im rückwärtigen Bereich des Fahrzeugs unterbringbar ist, aus zwei oder auch mehreren zusammenklappbaren Ladeplattformteilen gebildet. Dadurch wird die Länge der Ladeplattform in Fahrtrichtung mindestens halbiert, wodurch sie in ihrer Ruhestellung weniger Platz unter dem Heckbereich des Fahrzeugs benötigt. Eine solche Hubladebühne ist aus der DE 44 30 437 A1 bekannt.

Das Verfahren einer Hubladebühne der eingangs genannten Art von der Ruhestellung in die Betriebsstellung und umgekehrt muss bislang manuell gesteuert erfolgen, wozu die Bedienungsperson mehrere Bedienorgane in einer bestimmten Aufeinanderfolge zu betätigen hat. Das erfordert eine geübte Bedienungsperson. Auch bei einer geübten Bedienungsperson kann es jedoch zu Fehlbedienungen beim Ausfahren und Einfahren der Ladeplattform kommen. Dabei sind auch Beschädigungen der Hubladebühne nicht auszuschließen.

Aus der JP 2001-163595 A und der EP-A-0 773 136 sind Hubladebühnen mit einer einteiligen Ladeplattform bekannt. Neigungssensoren dienen bei diesen bekannten Hubladebühnen für besondere Steuerungen der Ladeplattform. Weil die bekannten Hubladebühnen aber über keine mehrteiligen Ladeplattformen verfügen, eignen sich die Neigungssensoren bei den bekannten Hubladebühnen nicht zum zuverlässigen automatischen Ausklappen und Einfahren der Ladeplattformteile mehrteiliger Ladeplattformen.

Der Erfindung liegt nun die Aufgabe zugrunde, ein Verfahren und eine Hubladebühne zu schaffen, womit das Ausfahren, einschließlich des mindestens teilweisen Ausklappens der Ladeplattformteile der Ladeplattform, und das Einfahren in einfacher und zuverlässiger Weise größtenteils automatisch erfolgen können.

Ein Verfahren zur Lösung dieser Aufgabe weist die Maßnahmen des Anspruchs 1 auf. Demnach werden vorzugsweise alle Bewegungsabläufe zum Ausfahren und auch zum Einfahren der Ladeplattform und auch zum mindestens teilweisen Ein- und Ausklappen der Ladeplattformteile automatisch gesteuert. Dadurch braucht die Bedienungsperson nur noch ein einziges Bedienorgan zu betätigen, um die Ladeplattform sowohl in die Betriebsstellung als auch in die Ruhestellung zu überführen. Die Bedienungsperson braucht praktisch nur noch das Ein- und Ausfahren zu starten durch Betätigung des einzigen Bedienungsorgans. Die Steuerung bringt dann die Ladeplattform automatisch in die Betriebsstellung oder zurück in die Ruhestellung. Aus Sicherheitsgründen ist vorgesehen, dass die Bedienungsperson das Bedienorgan solange festhält, bis die Ladeplattform in die Betriebsstellung oder die Ruhestellung gebracht ist. Durch Loslassen des Bedienorgans kann der Vorgang automatisch gestoppt werden, wenn das erforderlich sein sollte.

Außerdem ist vorgesehen, die aufeinanderfolgenden Bewegungsabläufe sowohl beim Ein- und Ausfahren der Ladeplattform so wie beim mindestens teilweisen Aus- und Einschwenken der Ladeplattformteile in Abhängigkeit von Sensorsignalen automatisch zu steuern. Des Weiteren werden wenigstens zu Beginn des Ausfahrens der Ladeplattform die Winkelsignale der Neigungssensoren ermittelt und in einer Steuerung abgespeichert. Die Sensoren detektieren bestimmte Stellungen der Ladeplattform und insbesondere auch andere Teile der Hubladebühne, insbesondere Teile des Hubwerks, die eine Lageänderung zum Ein- und Ausfahren der Hubladebühne erfordern. Eine Steuerung durchfährt dabei ein eingespeichertes Programm zum Überführen der Ladeplattform in die Betriebsstellung und umgekehrt, und zwar in Abhängigkeit von zwischen aufeinanderfolgenden Bewegungsabläufen sich befindenden definierten Positionen bzw. Zwischenstellungen, die die Sensoren detektieren.

Bevorzugt ist vorgesehen, die Bewegungsabläufe zum Ein- und Ausfahren der Ladeplattform in Abhängigkeit von Winkelsignalen der Sensoren automatisch zu steuern. Die Sensoren können bestimmte Neigungen ausgewählter Teile der Hubladebühne, insbesondere des Hubwerks und einzelner Ladeplattformteile, fortlaufend detektieren, so dass die Steuerung einen kontinuierlichen Signalfluss erhält und dadurch eine Verfolgung des Wegs der Hubladebühne beim Ein- und Ausfahren einschließlich der dabei erfolgenden Verschwenkungen der Ladeplattform möglich ist. Die von den Sensoren abgegebenen Winkelsignale sind zum Steuern und Überwachen des Ein- und Ausfahrens der Ladeplattform der Hubladebühne besonders vorteilhaft, weil Komponenten der Hubladebühne, insbesondere die Ladeplattformteile, aber auch Lenker des Hubwerks, nicht nur translatorisch bewegt werden, sondern überwiegend auch rotatorisch. Dadurch können vor allem Schwenkbewegungen der einzelnen Komponenten der Hubladebühne, insbesondere Ladeplattformteile und/oder Lenker, beim Ein- und Ausfahren der Ladeplattform von der Ruhestellung in die Betriebsstellung und umgekehrt zuverlässig ermittelt werden. So kann die Steuerung in einer gezielten Aufeinanderfolge die einzelnen Komponenten der Hubladebühne, insbesondere die Ladeplattformteile, gezielt positionsgerecht verschwenken und verfahren, wobei die Winkelsignale abgebenden Sensoren nicht nur zum Anfahren bestimmter Positionen der Hubladebühne dienen, sondern auch zur Überwachung der Bewegungen während des Ein- und Ausfahrens der Ladeplattform.

Bei einer bevorzugten Ausgestaltung der Erfindung wird mindestens zu Beginn des Ausfahrvorgangs der Ladeplattform, also vor dem Beginn des Überführens der Ladeplattform von der Ruhestellung in die Betriebsstellung, ein Abgleich der Winkelsignale mindestens eines Sensors, vorzugsweise aber aller Sensoren, vorgenommen. Es handelt sich hierbei insbesondere um einen Nullabgleich. Dieser geschieht derart, dass festgestellt wird, welchen Winkelwert der mindestens eine Sensor zu Beginn des Aus- und/oder Einfahrens der Hubladebühne abgibt. Es wird ausgegangen von mindestens einem Winkelsignal, das ein Sensor abgibt, wenn die Hubladebühne sich in der Ruhestellung befindet und das Fahrzeug, woran die Hubladebühne montiert ist, waagerecht steht. Vorzugsweise werden die Winkelsignale aller Sensoren bei waagerecht stehendem Fahrzeug und sich in der Ruhestellung befindlicher Hubladebühne herangezogen zur Bildung von ideellen Soll-Winkelwerten. In der Praxis wird das Fahrzeug nur selten waagerecht stehen, wenn die Hubladebühne ein- und ausgefahren werden soll. In der Regel steht das Fahrzeug in Fahrtrichtung bzw. Längsrichtung gesehen mehr oder weniger schräg. Wenn nun vor Beginn des Ausfahrens der Ladeplattform aus der Ruhestellung die Winkelwerte vorzugsweise aller Sensoren ermittelt werden, weichen diese um einen solchen Winkelwert von den Sollwinkelwerten ab, der dem Neigungswinkel des Untergrundes entspricht, worauf das Fahrzeug steht. Nach dem erfindungsgemäßen Verfahren wird nun vor dem Herausbewegen der Ladeplattform aus der Ruhestellung mindestens ein vom entsprechenden Sensor ermittelter Winkelwert abgeglichen auf einen Sollwinkelwert, der sich ergeben müsste, wenn das Fahrzeug bezüglich seiner Längsrichtung exakt waagerecht stünde. Dieser Abgleich kann so erfolgen, dass mindestens ein tatsächlich gemessener Winkelwert korrigiert wird auf den Winkelwert, der sich ergeben müsste, wenn das Fahrzeug gerade ausgerichtet wäre, weil es auf einem waagerechten Untergrund steht. Dieser mindestens eine abgeglichene und dadurch korrigierte Winkelwert wird nun beim automatischen Bewegen der Hubladebühne von der Ruhestellung in die Betriebsstellung - aber auch umgekehrt - herangezogen. Vorzugsweise sind zwei Sensoren vorgesehen, wobei die Winkelwerte beider Sensoren in der zuvor beschriebenen Weise abgeglichen werden.

Die Erfindung stellt auf diese Weise sicher, dass die Bewegungsabläufe zum Ein- und Ausfahren der Hubladebühne sich nicht stets in Abhängigkeit von der Neigung des Untergrunds, worauf das Fahrzeug steht, ändern. Vielmehr sind die Bewegungsabläufe durch den Nullausgleich der ursprünglich von den Sensoren gemessenen Winkelwerte stets gleich. Bewegungsabläufe zum Ein- und Ausfahren der Hubladebühne erfolgen also relativ zum Fahrzeug immer gleich, und zwar egal, ob das Fahrzeug gerade ausgerichtet ist oder mehr oder weniger schräg steht.

Es lassen sich bevorzugt Winkelsensoren zur Detektion der Bewegungsabläufe der Hubladebühne beim Ein- und Ausfahren derselben verwenden. Dadurch können die Bewegungsabläufe der Hubladebühne zuverlässig und kontinuierlich mit wenigen Sensoren kontinuierlich ermittelt und überwacht werden. Würden andere Sensoren verwendet werden, deren Signale vom Standort, insbesondere der Neigung, des Fahrzeugs unabhängig sind, beispielsweise Lichtschranken oder Endschalter, wären weitaus mehr Sensoren erforderlich, als dass es beim Einsatz von Winkelsensoren der Fall ist. Diese mehreren Sensoren müssten aufwendig verkabelt werden und sind störanfälliger als Winkelsensoren, die erfindungsgemäß eingesetzt werden.

Eine Hubladebühne zur Lösung der eingangs genannten Aufgabe weist die Merkmale des Anspruchs 5 auf. Demnach sind Neigungssensoren vorgesehen, die ein der jeweiligen Lage bzw. Stellung des Hubwerks und/oder der Ladeplattform entsprechendes Signal liefern. Die Signale werden zu einer Steuerung geführt, die von den Neigungssensoren fortlaufend Informationen über die Position des Hubwerks und der Ladeplattform erhält.

Es ist weiterhin vorgesehen, vorzugsweise beide Neigungssensoren in einer solchen Ausrichtung am Lenker und am hiermit verbundenen Ladeplattformteil anzuordnen, dass in der eingefahrenen Ruhestellung der Hubladebühne und waagerecht ausgerichtetem Fahrzeug alle Neigungssensoren ein gleiches Winkelsignal, vorzugsweise einen Nullwert, der einem Winkel von 0° entspricht, an die Steuerung abgeben. Bezogen auf diesen Wert können in die Steuerung alle anderen Winkelwerte der beiden Neigungssensoren einprogrammiert werden, die erforderlich sind, um alle Bewegungsabläufe, und zwar sowohl translatorische Bewegungen als auch Schwenkbewegungen der Ladeplattform und des Hubwerks zum Überführen der Ladeplattform von der Ruhestellung in die Gebrauchsstellung und umgekehrt, exakt zu steuern. Selbst wenn das Fahrzeug beim Ein- und Ausfahren der Ladeplattform schräg stehen sollte, werden durch den erfindungsgemäßen Nullabgleich aller Neigungssensoren oder nur eines Neigungssensors vor dem Beginn des Ein- bzw. Ausfahrens der Ladeplattform exakt die vorgegebenen Positionen automatisch angefahren. Die Abhängigkeit der Neigungssensoren von der Ausrichtung des Fahrzeugs gegenüber der Horizontalen oder Waagerechten wird so kompensiert.

Durch die Anordnung der Neigungssensoren am Hubwerk und an der Ladeplattform erzeugt stets mindestens ein Neigungssensor ein sich kontinuierlich änderndes Signal, weil selbst bei einer translatorischen horizontalen oder vertikalen Bewegung der Ladeplattform das den anderen Neigungssensor tragende Teil des Hubwerks seine Neigung verändert. Aufgrund der Relation der von den Neigungssensoren laufend abgegebenen Winkelsignale erhält die Steuerung fortlaufende Informationen über den Bewegungsablauf der Hubladebühne während ihrer Überführung von der Ruhestellung in die Betriebsstellung und umgekehrt. Dadurch kann die Steuerung die Ladeplattform und insbesondere die Ladeplattformteile exakt so verfahren und auch verschwenken, dass die Ladeplattform zuverlässig und beschädigungslos in die Betriebsstellung oder auch in die Ruhestellung gelangt. Weil die zur Überführung der Ladeplattform von der Betriebsstellung in die Ruhestellung und umgekehrt erforderlichen Bewegungsabläufe von der Steuerung abgefahren werden, wird die Bedienungsperson hiervon entlastet. Die Bedienungsperson braucht lediglich ein einziges Bedienorgan zu betätigen, und zwar entweder durch kurzes Drücken oder ständiges Festhalten während des gesamten Ein- und Ausfahrvorgangs.

Alles andere übernimmt die Steuerung, und zwar unterstützt von den von den Neigungssensoren fortlaufend ermittelten Winkelsignalen, die stets genaue Angaben über die jeweilige Stellung der Ladeplattform und des Hubwerks während des Ein- und Ausfahrvorgangs liefern.

Falls aus irgendwelchen Gründen, beispielsweise aufgrund eines Hindernisses auf dem Boden, die Ladeplattform von der Steuerung nicht so weit absenkbar ist, dass sich die Ladeplattform von der Betriebsstellung in die Ruhestellung und umgekehrt bringen lässt, ohne die Gefahr einer Kollision mit dem heckseitigen Bereich des Fahrzeugaufbaus, liefert mindestens ein Neigungssensor ein entsprechendes Signal an die Steuerung. In diesem Falle wird die Ladeplattform oder mindestens ein Ladeplattformteil so verschwenkt, dass ein ausreichender Abstand zum Aufbau des Fahrzeugs entsteht und kollisionsfrei die Ladeplattform ausgeklappt werden kann. Die Entscheidung, ob ein solches Verschwenken erforderlich ist und der Umfang der Verschwenkung werden von der Steuerung ermittelt und der Ein- und Ausfahrvorgang entsprechend durchgeführt.

Gemäß einer Weiterbildung der erfindungsgemäßen Hubladebühne ist vorgesehen, einen Neigungssensor an einem Lenker des Hubwerks und einen zweiten Neigungssensor an der am Hubwerk angelenkten Ladeplattform anzuordnen. Durch diese beiden Neigungssensoren lässt sich kontinuierlich der Verfahrvorgang der Hubladebühne zum Überführen der Ladeplattform von der Ruhestellung in die Betriebsstellung und umgekehrt feststellen. Durch die Anordnung jeweils eines Neigungssensors am Lenker des Hubwerks und der daran angeordneten Ladeplattform, insbesondere einem Ladeplattformteil, registriert stets mindestens ein Neigungssensor eine Winkeländerung, und zwar auch dann, wenn die Ladeplattform nur translatorisch auf- und ab- bzw. hin- und herbewegt wird. Die Steuerung beim automatischen Ein- und Ausfahren der Ladeplattform erhält so alle erforderlichen Informationen, um präzise und ohne die Gefahr einer Kollision mit dem Fahrzeug den Ein- und Ausfahrvorgang und gegebenenfalls auch des Ein- und Ausschwenkens der Ladeplattformteile zu steuern.

Ein bevorzugtes Ausführungsbeispiel der Erfindung wird nachfolgend anhand der Zeichnung näher erläutert. In dieser zeigen:
- Fig. 1: eine Seitenansicht der Hubladebühne in einer Ruhestellung,
- Fig. 2: eine Ansicht der Hubladebühne analog zur Fig. 1 in einer teilweise aus der Ruhestellung herausbewegten Stellung,
- Fig. 3: eine Ansicht der Hubladebühne analog zu den Fig. 1 und 2 in einer Betriebsstellung,
- Fig. 4: eine schematische Explosionsdarstellung der einzelnen Bewegungsabläufe beim Ausfahren der Hubladebühne in die Betriebsstellung,
- Fig. 5: die einzelnen Bewegungsabläufe beim Einfahren der Hubladebühne in die Ruhestellung in einer Ansicht analog zur Fig. 4,

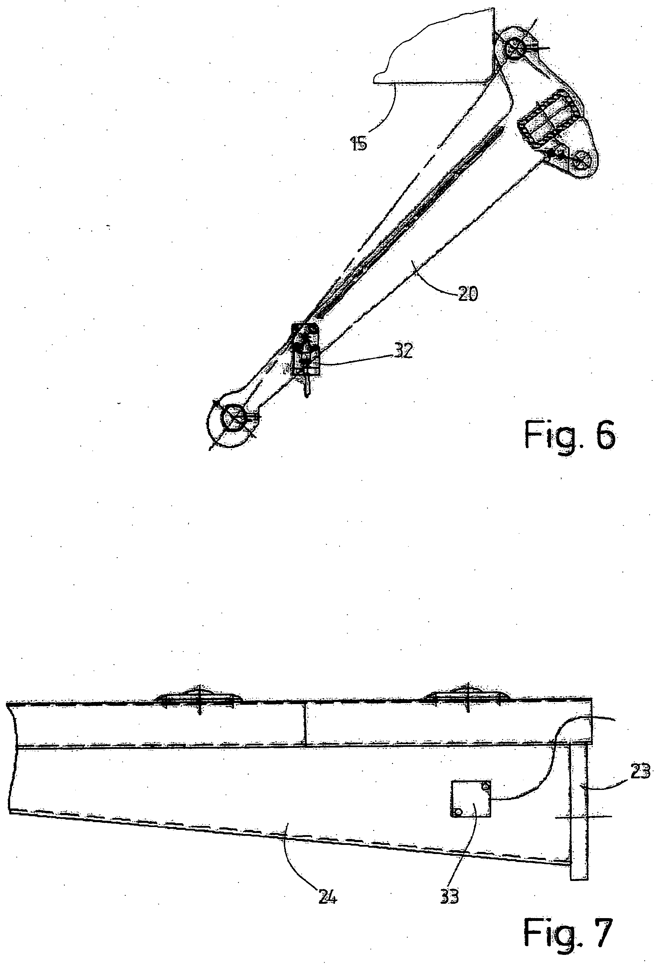

- Fig. 6: die Anordnung eines Neigungssensors an einem Lenker des Hubwerks der Hubladebühne, und
- Fig. 7: die Anordnung eines Neigungssensors an der Ladeplattform der Hubladebühne.

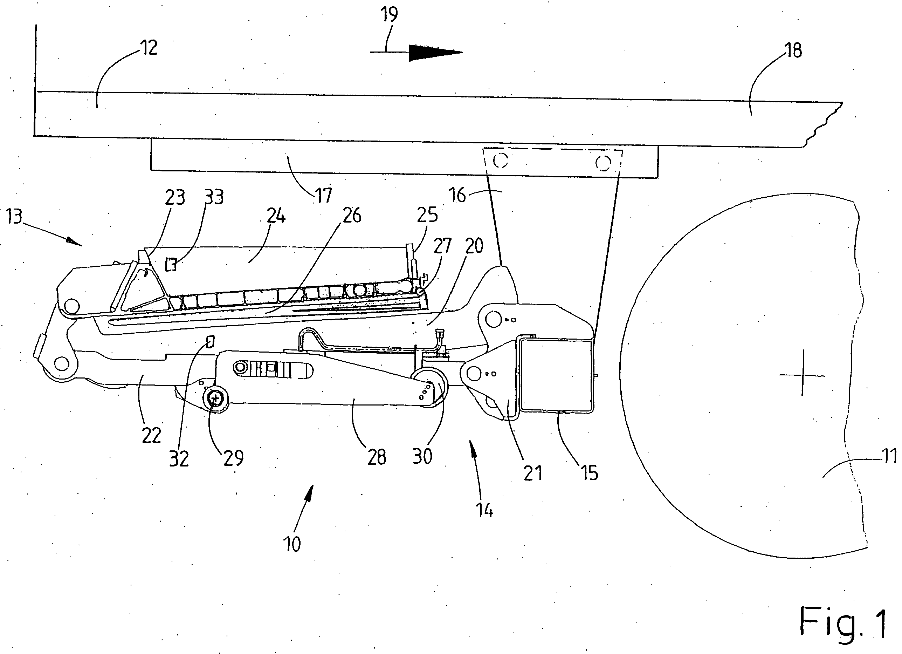

Die Figuren zeigen eine sogenannte unterziehbare Hubladebühne 10. Die Hubladebühne 10 ist in einem rückwärtigen Bereich eines teilweise dargestellten Fahrzeugs angeordnet. Dabei befindet sich die Hubladebühne 10 in einem gegenüber den Hinterrädern 11 rückseitig überhängendem Teil des Aufbaus 12 des Fahrzeugs. Bei Nichtgebrauch ist die Hubladebühne 10 eingefaltet und eingezogen, so dass sie sich vollständig unter dem rückwärtigen Teil des Aufbaus 12 des Fahrzeugs befindet (Fig. 1). Diese zusammengefaltete und eingefahrene Position der Hubladebühne 10 wird nachfolgend als "Ruhestellung" bezeichnet.

Die Hubladebühne 10 wird im Wesentlichen gebildet aus einer Ladeplattform 13 und einem Hubwerk 14. Das Hubwerk 14 ist an einem sich quer zur Fahrtrichtung hinter den Hinterrädern 11 erstreckenden Tragrohr 15 befestigt. Das Tragrohr 15 ist im gezeigten Ausführungsbeispiel als ein Vierkantrohr ausgebildet, kann aber auch beliebige andere Querschnitte aufweisen, beispielsweise rund ausgebildet sein. Das Tragrohr 15 wiederum ist über einer Konsole 16 verfahrbar in vorzugsweise zwei parallelen Schienen 17 gelagert. Die Schienen 17 sind direkt oder indirekt mit Längsholmen 18 vom Chassis des Fahrzeugs verbunden. Die Schienen 17 verlaufen gleichgerichtet zum Längsholm 18, erstrecken sich also in Fahrtrichtung 19 des Fahrzeugs. Die das Tragrohr 15 mit dem daran befestigten Hubwerk 14 tragende Konsole 16 ist durch beispielsweise Rollen an oder in den Schienen 16 verfahrbar. Dadurch kann die gesamte Hubladebühne 10 unter dem Aufbau 12 des Fahrzeugs in Fahrtrichtung 19 gegen die Fahrtrichtung 19 verfahren werden. In der Ruhestellung ist die Hubladebühne 10 von der Konsole 16 vollständig unter den Aufbau 12 verfahren, wobei sich die Konsole 16 im bezogen auf die Fahrtrichtung 19 vorderen Bereich der Schienen 17 befindet (Fig. 1). Durch Verfahren der Konsole 16 an das hintere Ende der Schienen 17 wird die Hubladebühne 10 aus dem rückwärtigen Bereich des Aufbaus 12 entgegen der Fahrtrichtung 19 nach hinten ausgefahren. Zum Verfahren der Konsole 16 mit der Hubladebühne 10 längs der Schienen 17 dient in der Regel mindestens ein nicht gezeigter Verfahrzylinder, wobei es sich um einen Hydraulikzylinder handeln kann. Es können aber auch andere Bewegungsorgane eingesetzt werden, beispielsweise Seil-, Ketten- oder Zahnstangentriebe.

Das Hubwerk 14 verfügt über zwei gegenüberliegenden Seiten des Fahrzeugs zugeordnete Lenker 20. Die im Wesentlichen gleich ausgebildeten Lenker 20 bilden ein Lenkerpaar, wobei die Lenker 20 in parallelen vertikalen Ebenen auf- und abbewegbar, nämlich verschwenkbar, sind. Dazu sind die Lenker 20 mit ihren zu den Hinterrädern 11 weisenden Enden schwenkbar in Lagerböcken 21 am Tragrohr 15 gelagert. An den gegenüberliegenden Enden beider Lenker 20 ist die Ladeplattform 13 angelenkt, und zwar ebenfalls schwenkbar. Jedem Lenker 20 sind ein Hubzylinder und ein Kippzylinder 31 zugeordnet. Hierbei handelt es sich vorzugsweise um Hydraulikzylinder. Diese sind in den Figuren nur teilweise sichtbar, weil sie durch die Lenker 20 abgedeckt sind. Es ist des Weiteren jedem Lenker 20 ein Parallelogrammlenker 22 zugeordnet. Die Parallelogrammlenker 22 sind an einem Ende schwenkbar am Lagerbock 21 befestigt und am anderen Ende mit der quer zur Fahrtrichtung 19 verlaufenden Hinterkante 23 der Ladeplattform 13 verbunden. Es bilden so auf jeder Seite des Hubwerks 14 die Parallelogrammlenker 22 und die Lenker 20 ein Parallelogramm. Dieses an sich bekannte Parallelogramm dient dazu, beim Absenken und Anheben der Ladeplattform 13 durch die Hubzylinder die Neigung der Ladeplattform 13 annähernd konstant zu halten. Eine gezielte Veränderung der Neigung der Ladeplattform 13 erfolgt durch die Kippzylinder 31.

Die Ladeplattform 13 ist, wie bei unterziehbaren Hubladebühnen 10 üblich, mehrteilig ausgebildet. Im gezeigten Ausführungsbeispiel ist die Ladeplattform 13 aus zwei Teilen gebildet, und zwar das mit der Hinterkante 23 am Hubwerk 14 angelenkte Ladeplattformteil 24 und das an der gegenüberliegenden Vorderkante 25 des Ladeplattformteils 24 schwenkbar angelenkte zweite Ladeplattformteil 26, das im Folgenden als endseitiges Ladeplattformteil 26 bezeichnet wird. Beide Ladeplattformteile 24 und 26 sind durch eine sich quer zur Fahrtrichtung 19 erstreckende Scharnierachse 27 miteinander verbunden. Das endseitige Ladeplattformteil 26 ist gegenüber dem mit dem Hubwerk 14 verbundenen Ladeplattformteil 24 verschwenkbar, und zwar um etwa 180°. In der in der Fig. 1 gezeigten Ruhestellung ist das endseitige Ladeplattformteil 26 unter das Ladeplattformteil 24 geschwenkt. So ist die Länge der Ladeplattform 13 auf etwa die Hälfte reduziert. Dadurch lässt sich die Hubladebühne 10 mit der eingefalteten Ladeplattform 13 unter dem gegenüber den Hinterrädern 11 nach hinter überstehenden Bereich des Aufbaus 12 des Fahrzeugs verstauen, nämlich einziehen, wenn die Hubladebühne 10 sich in der Ruhestellung befindet.

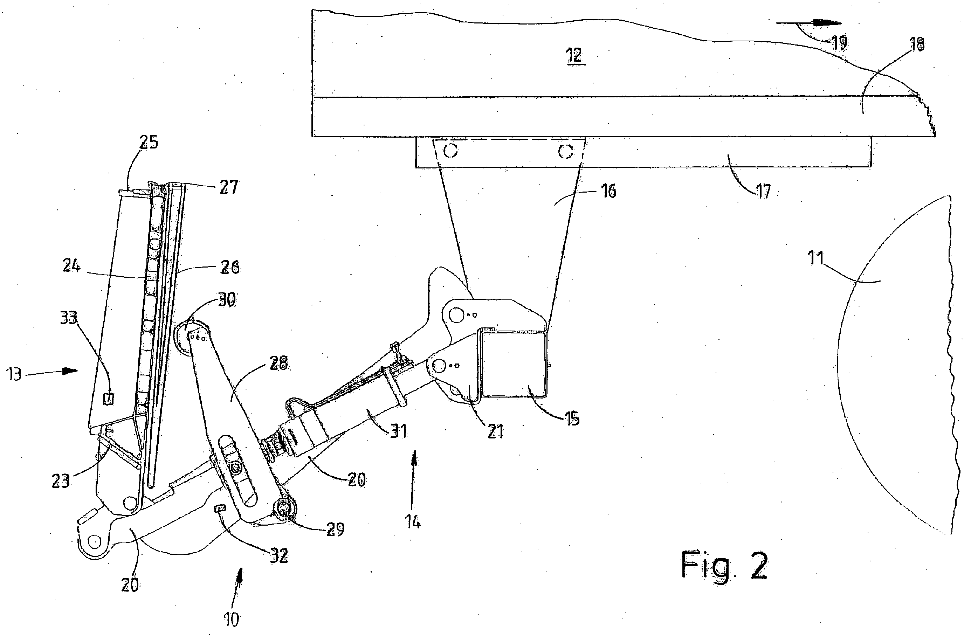

Die in den Fig. 1 bis 3 gezeigte Hubladebühne 10 ist mit einem Schwenkmittel versehen. Dieses ist gebildet durch einen Schwenkarm 28, der nach Art eines einarmigen Hebels in einer vertikalen Ebene verschwenkbar ist um eine horizontale Drehachse 29. Die Drehachse 29 befindet sich zwischen den gegenüberliegenden Enden des Lenkers 20, dem der Schwenkarm 28 zugeordnet ist. Der Schwenkarm 28 ist um die Drehachse 29 schwenkbar mit dem Lenker 20 verbunden. Ein der Drehachse 29 gegenüberliegendes freies Ende des Schwenkarms 28 ist der Unterseite des im eingefalteten Zustand unten liegenden endseitigen Ladeplattformteils 26 zugeordnet (Fig. 1). Das freie Ende des Schwenkarms 28 weist eine frei drehbare Rolle 30 auf. Diese Rolle 30 dient zur Anlage unter dem eingeklappten Ladeplattformteil 26, wenn der Schwenkarm 28 beide zusammengeklappten Ladeplattformteile 24 und 26 aus der Ruhestellung hochschwenkt (Fig. 2).

Der Schwenkarm 28 ist von einem Betätigungsorgan zum Heben, Senken bzw. Verkippen der Ladeplattform 13 verschwenkbar. Im gezeigten Ausführungsbeispiel steht der Schwenkarm 28 mit einem Kippzylinder 31 des Hubwerks 14 und dem dazugehörenden Parallelogrammlenker 22 in Verbindung. Dadurch ist der Schwenkarm 28 durch den Parallelogrammlenker 22 und/oder den Kippzylinder 31 verschwenkbar, und zwar sowohl zum etwa senkrechten Hochschwenken der zusammengeklappten Ladeplattformteile 24 und 26 der Ladeplattform 13 als auch zum geführten Zurückschwenken der zusammengeklappten Ladeplattformteile 24 und 26 in die Ruhestellung.

Es ist auch denkbar, dass die Hubladebühne 10 mindestens einen separaten Ausfaltzylinder aufweist, womit beide Ladeplattformteile 24 und 26 der Ladeplattform 13 im noch im zusammengeklappten Zustand vollständig um 180° verschwenkbar sind, und zwar sowohl von der Ruhestellung in die Betriebsstellung als auch umgekehrt. Hierbei erfolgt das Aus- und Einklappen der noch zusammengeklappten Ladeplattform 13 vollständig hydraulisch. Es braucht nur das kleinere, leichtere endseitige Ladeplattformteil 26 gegenüber dem Ladeplattformteil 24 manuell verschwenkt zu werden; dieses kann aber auch automatisch, zum Beispiel hydraulisch, erfolgen.

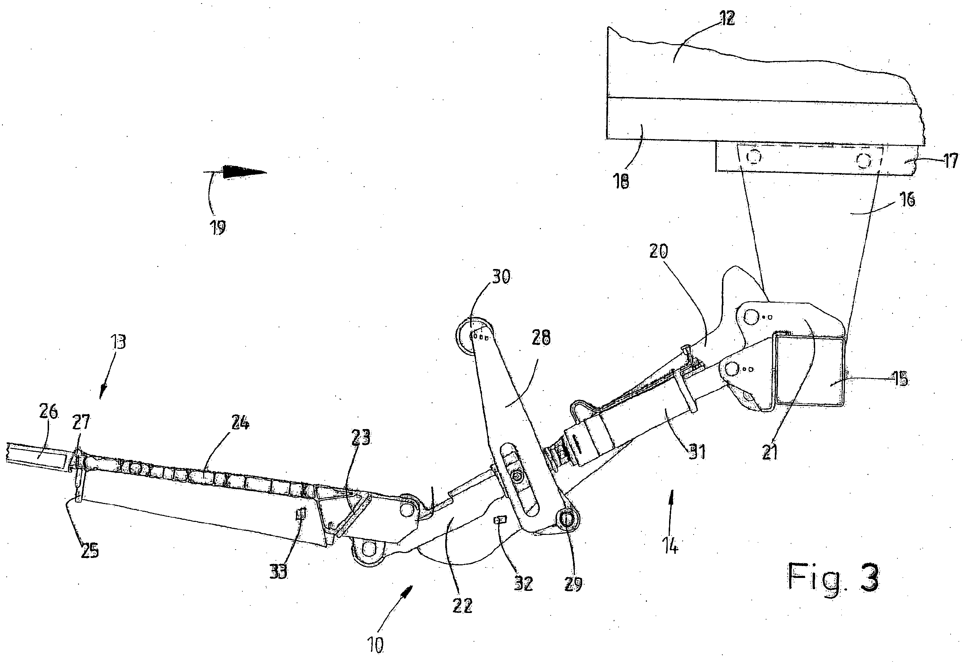

Erfindungsgemäß ist vorgesehen, das Ausfahren der Hubladebühne 10, insbesondere Ladeplattform 13, von der Ruhestellung in die Betriebsstellung automatisch durch eine entsprechende Steuerung erfolgen zu lassen. Ebenso erfolgt automatisch das Einfahren der Hubladebühne 10, insbesondere der Ladeplattform 13, von der Betriebsstellung in die Ruhestellung. Lediglich das Aus- und Einklappen des endseitigen Ladeplattformteils 26 muss manuell erfolgen. Zusätzlich muss bei der in Fig. 1 bis 3 gezeigten Hubladebühne 10 noch manuell die eingeklappte Ladeplattform 13 über den oberen Totpunkt hinweg ausgeklappt werden (von der Stellung der Fig. 2 in die Stellung gemäß der Fig. 3). Alles andere erfolgt automatisch, wobei die Bedienungsperson nur einen einzigen Knopf zu betätigen hat, der vorzugsweise, nämlich aus Sicherheitsgründen, während des gesamten Aus- und Einfahrvorgangs der Hubladebühne 10 gehalten bleibt.

Die Steuerung benötigt Informationen über das Erreichen bestimmter Abschnitte, die beim Ein- und Ausfahren der Hubladebühne 10, insbesondere der Ladeplattform 13, nacheinander angefahren werden müssen. Um diese Informationen mit wenigen Hilfsmitteln der Steuerung im ausreichenden Maße zur Verfügung stellen zu können, ist vorgesehen, Mittel zu verwenden, die die Neigung bestimmter Teile der Hubladebühne 10 detektieren. Im gezeigten Ausführungsbeispiel werden Neigungssensoren verwendet. Erfindungsgemäß reicht es aus, wenn der Hubladebühne 10 zwei Neigungssensoren zugeordnet sind, und zwar einer der Ladeplattform 13 und ein anderer dem Hubwerk 14. Im hier gezeigten Ausführungsbeispiel ist ein Neigungssensor 32 einem Lenker 20 des Hubwerks 14 zugeordnet, während der zweite Neigungssensor 33 dem am Hubwerk 14 angelenkten Ladeplattformteil 24 der Ladeplattform 13 zugeordnet ist. Es ist auch denkbar, den Neigungssensor 33 am endseitigen Ladeplattformteil 26 vorzusehen. Ebenso kann der erste Neigungssensor 32 auch an einem Parallelogrammlenker 22 des Hubwerks 14 angeordnet sein oder auch an einem Kippzylinder 31 oder einem Hubzylinder.

Mindestens der Neigungssensor 32 ist am Lenker 20 in einer solchen Relativlage angeordnet, dass bei der in der Ruhestellung befindliche Hubladebühne 10 der Neigungssensor 32 ein definiertes Winkelsignal, insbesondere ein einen Winkel von 0° detektierendes Signal, abgibt. In gleicher Weise kann auch der Neigungssensor 33 am Ladeplattformteil 24 befestigt sein, das heißt, auch er gibt in der Ruhestellung der Hubladebühne 10 bevorzugt ein Signal ab, das einem Winkel von 0° entspricht.

In der Steuerung sind Winkelwerte für die Signale der Neigungssensoren 32 und 33 abgespeichert, die den nach und nach anzufahrenden Stellungen der Hubladebühne 10 entsprechen. Es handelt sich dabei um Winkelwerte, die das Ende eines jeden der aufeinanderfolgenden Bewegungsabläufe zum Überführen der Hubladebühne 10 von der Ruhestellung in die Betriebsstellung und umgekehrt darstellen. Diese Winkelwerte der Neigungssensoren 32 und 33 werden erreicht allein durch Schwenkbewegungen oder Hub- bzw. Senkbewegungen der Ladeplattform 13. Die abgespeicherten Winkelsignale werden von den Neigungssensoren 32 und 33 erzeugt, wenn das Fahrzeug exakt horizontal ausgerichtet ist, also auf einem ebenen, horizontalen Untergrund steht und dabei die Hubladebühne ein und ausgefahren wird.

In der Regel befindet sich das Fahrzeug aber auf einem leicht gegenüber der Horizontalen geneigten Untergrund, ist also nicht immer horizontal ausgerichtet. Dann erzeugen die Neigungssensoren 32 und 33 bereits in der Ruhestellung der Hubladebühne 10 ein Winkelsignal, das nicht den in der Steuerung abgespeicherten Ausgangswinkelwerten entspricht, vorzugsweise größer oder kleiner als 0° ist. Würde daraufhin die Steuerung automatisch die Hubladebühne 10 ein- und ausfahren, könnte es zu Kollisionen mit insbesondere der Unterseite des Aufbaus 12 des Fahrzeugs kommen. Zu diesem Zweck ist erfindungsgemäß vorgesehen, zu Beginn mindestens des Ausfahrvorgangs, also vor dem Herausbewegen der Hubladebühne 10 aus der Ruhestellung, einen Abgleich zumindest des Neigungssensors 32 am Lenker 20 oder einem sonstigen Teil des Hubwerks 14 vorzunehmen. Vorzugsweise erfolgt auch ein Abgleich des Neigungssensors 33 an der Ladeplattform 13, obwohl dieses nicht zwingend erforderlich ist, weil allein ein Abgleich des Neigungssensors 32 am Hubwerk 14 ausreichen kann. Der Abgleich des Neigungssensors 32 und gegebenenfalls auch des Neigungssensors 33 erfolgt automatisch unter Zuhilfenahme der Steuerung derart, dass bei geneigt stehendem Fahrzeug, wenn mindestens der Neigungssensor 32 ein Winkelsignal erzeugt, das vom Sollwinkelsignal abweicht, dieses Winkelsignal für den nachfolgenden Ausfahrvorgang der Hubladebühne 10 automatisch so verändert wird, dass die Steuerung mindestens vom Neigungssensor 32, gegebenenfalls auch vom Neigungssensor 33, ein Signal erhält, was dem Sollwinkelwert bei exakt waagerecht bzw. horizontal ausgerichtetem Fahrzeug, vorzugsweise 0°, entspricht. Auf diese Weise werden auch bei schräg stehendem Fahrzeug von der Steuerung automatisch stets Positionen, insbesondere am Ende jedes Abschnitts zum Ausfahren und Einfahren der Hubladebühne 10, angefahren, die relativ zum Fahrzeug immer gleich sind, und zwar unabhängig davon, wie stark und in welche Richtung das Fahrzeug bezüglich seiner Längsrichtung jeweils beim Ein- und Ausfahren der Hubladebühne 10 geneigt ist. Durch die unter allen Umständen gleiche Relativposition der einzelnen Abschnitte und Zustände beim Ein- und Ausfahren der Hubladebühne 10 zum Fahrzeug werden durch die Erfindung Kollisionen der Hubladebühne 10 mit dem Fahrzeug vermieden, und zwar auch dann, wenn dieses insbesondere beim Ein- und Ausfahren der Hubladebühne stark geneigt ist, und das trotz der Verwendung von Neigungssensoren 32 und 33, die ein von der Neigung des Fahrzeugs abhängiges Winkelsignal erzeugen. Durch die von der Erfindung erst ermöglichte Verwendung von Neigungssensoren 32 und 33 zum zuverlässigen kollisionsfreien Ein- und Ausfahren der Hubladebühne 10 bei beliebiger Längsneigung des Fahrzeugs können andere winkelunabhängige Sensoren, insbesondere Endschalter, vermieden werden, die in einer wesentlich größeren Anzahl erforderlich wären als die nur zwei Neigungssensoren 32 und 33.

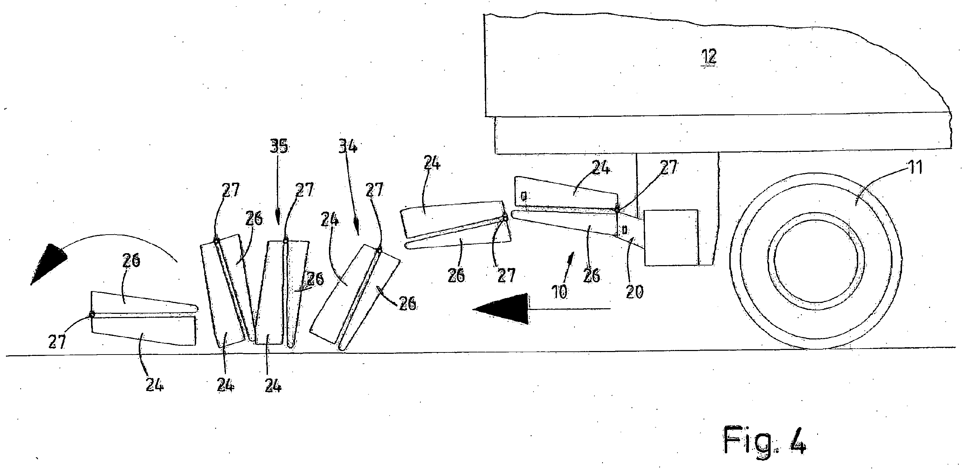

Anhand der Fig. 4 wird nachfolgend der Ausfahrvorgang der Hubladebühne 10 von der Ruhestellung in die Betriebsstellung beschrieben, wobei aus Gründen der besseren Veranschaulichung die einzelnen Zwischenstellungen der Ladeplattform 13 explosionsartig auseinandergezogen sind, um Überlagerungen der einzelnen Zwischenstellungen beim Ausfahren der Ladeplattform 10 in der Darstellung der Fig. 4 zu vermeiden.

Die Bedienungsperson braucht zum Ausfahren der Hubladebühne 10 nur einen einzigen Schalter am Bedienfeld zu betätigen, der aus Sicherheitsgründen während des gesamten Ausfahrvorgangs von der Bedienungsperson gehalten bleibt.

Sobald der Schalter betätigt ist, erfolgt zunächst der erfindungsgemäße Nullabgleich mindestens des Neigungssensors 32 an einem der beiden Lenker 20 des Hubwerks 14. Wenn - was der Normalfall ist - das Fahrzeug entgegen der Darstellung in der Fig. 4 bezogen auf die Fahrtrichtung 19 leicht schräg steht, wird der einen Winkel von größer als 0° oder kleiner als 0° detektierende Neigungssensor 32 derart abgeglichen, dass in die Steuerung ein dem in der Steuerung abgelegten Sollwinkelwert von zum Beispiel 0° einfließt. Bezogen auf diesen anfänglichen Sollwinkelwert mindestens des Neigungssensors 32 von zum Beispiel 0° in der Ruhestellung der Hubladebühne 10 sind in der Steuerung Winkelwerte der Neigungssensoren 32 und 33 am Ende jeder einzelnen Sequenz bzw. jedes einzelnen der aufeinanderfolgenden Bewegungsvorgänge der Hubladebühne 10 bei ihrem Ausfahren abgespeichert. Diese Winkelwerte der Neigungssensoren 32 und 33 entsprechen einer bestimmten Relativanordnung zum Fahrzeug, womit eine Kollision der Hubladebühne 10 beim Ausfahren mit dem Fahrzeug zuverlässig vermieden wird. Durch den Nullabgleich mindestens des Neigungssensors 32, gegebenenfalls auch des Neigungssensors 33, werden diese vorgegebenen und auch zur Vermeidung von Kollisionen einzuhaltenden Winkelstellungen der Neigungssensoren 32 und 33 und damit die Teile der diese tragenden Hubladebühne 10 beim Ausfahren der Hubladebühne 10 stets eingehalten.

Nachdem der Nullabgleich mindestens des Neigungssensors 32 erfolgt ist, wird zunächst die noch zusammengefaltete Ladeplattform 13 etwas abgesenkt auf einen voreingestellten Wert, der vom Neigungssensor 32 am Lenker 20 detektiert wird. Dadurch kommt die Ladeplattform 13 von der Unterseite des Aufbaus 12 des Fahrzeugs frei. Nunmehr wird die gesamte Hubladebühne 10 in den Schienen 17 parallel zur Unterseite des Aufbaus 12 verfahren, und zwar gegen die Fahrtrichtung 19 nach hinten, wodurch die Ladeplattform 13 aus dem heckseitigen Bereich des Aufbaus 12 freikommt.

Sobald die Ladeplattform 13 ans Ende der Schienen 17 verfahren ist, betätigt die Steuerung automatisch den mindestens einen Hubzylinder, wodurch die noch eingefaltete Ladeplattform 13 abgesenkt wird. Dieser Absenkvorgang erfolgt so lange, bis eine Bockrolle an der Hinterkante 23 des am Hubwerk 14 angelenkten Ladeplattformteils 24 auf dem Boden aufliegt. Der Neigungssensor 32 am Lenker 20 erkennt dieses dadurch, dass sich sein Winkelwert nicht mehr verändert. Diese Zwischenausfahrstellung ist in der Fig. 4 mit der Bezugsziffer 34 versehen.

Nachfolgend wird bei der in den Fig. 1 bis 3 gezeigten Hubladebühne 10 vom Schwenkarm 28 die noch eingeklappte Ladeplattform 13 aufgerichtet, und zwar bis kurz vor einer senkrechten Stellung 35. Diese kann auch vom Neigungssensor 32 und/oder 33 detektiert werden. Bei der Hubladebühne 10 der Fig. 1 bis 3 wird nun von Hand die noch eingeklappte Ladeplattform 13 über den Totpunkt geschwenkt, so dass das endseitige Ladeplattformteil 26 über dem am Hubwerk 14 angelenkten Ladeplattformteil 24 zu liegen kommt und eine Oberseite des Ladeplattformteils 24 etwa horizontal ausgerichtet ist. Dieses wird durch den am Ladeplattformteil 24 angebrachten Neigungssensor 31 und/ oder den Neigungssensor 32 detektiert, wobei gegebenenfalls von der Steuerung ein Verschwenken der Ladeplattform 13 erfolgt, damit diese tatsächlich horizontal ausgerichtet ist. Zum Schluss wird manuell das endseitige Ladeplattformteil 26 ausgeschwenkt. Danach hat die Hubladebühne ihre Betriebsstellung erreicht (Fig. 3).

Wenn aus irgendeinem Grund die Ladeplattform verhältnismäßig wenig abgesenkt werden kann, weil sich unter ihr beispielsweise ein Hindernis befindet und dadurch die Lenker 20 des Hubwerks 14 nicht in die beispielsweise in der Fig. 2 gezeigte schräge Stellung gelangen können, verfügt der Schwenkarm 28 über einen ungünstigen Angriffspunkt zum Aufrichten der Ladeplattform 13. In diesem Falle erzeugt die Steuerung ein Signal, wodurch vom Kippzylinder 31 die Ladeplattform 13 etwas verschwenkt wird, wodurch der Schwenkarm 28 unter einem größeren, stumpferen Winkel gegen die Ladeplattform 13, insbesondere das endseitige Ladeplattformteil 26 drücken kann, um dieses aufzurichten.

Bei einer Hubladebühne, bei der die Ladeplattform 13 vollständig automatisch ausgeschwenkt wird, wie beispielsweise einem Druckmittelzylinder, erfolgt auch das Verschwenken der noch eingeklappten Ladeplattform 13 von der Stellung 35 in eine horizontal ausgerichtete Position der Oberseite des Ladeplattformteils 24 automatisch. Gegebenenfalls kann auch das Ausschwenken des endseitigen Ladeplattformteils 26 automatisch erfolgen.

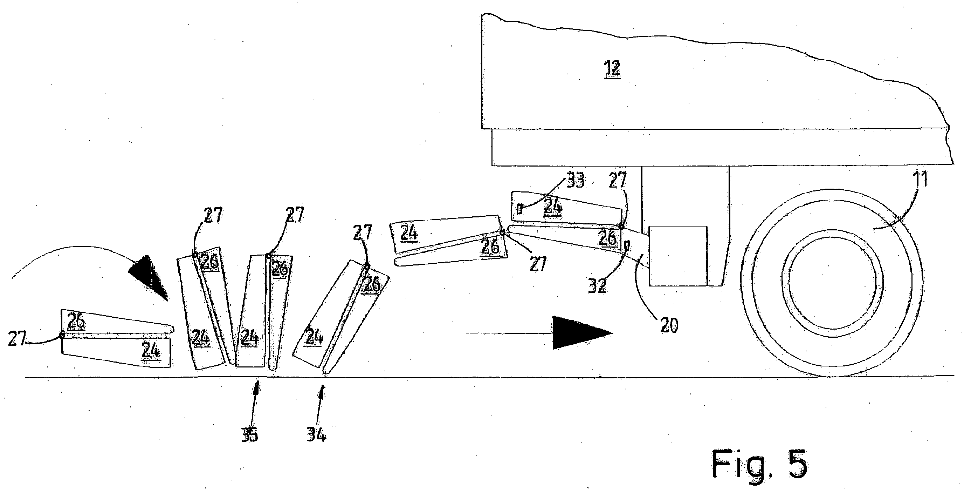

Die Fig. 5 zeigt das Einfahren der Hubladebühne 10 von der Betriebsstellung in die Ruhestellung unter dem heckseitigen Bereich des Aufbaus 12 des Fahrzeugs. Auch in diesem Falle braucht die Bedienungsperson nur einen einzigen Schalter oder dergleichen zu betätigen und während des Einfahrvorgangs in der betätigten Stellung zu halten, um die Hubladebühne 10 vollständig in die eingeklappte untergezogene Ruhestellung zu überführen.

Zu Beginn des Einfahrvorgangs braucht der vor dem Ausfahrvorgang erfolgende Winkelabgleich, insbesondere Nullabgleich, der Neigungssensoren 32 und 33 nicht zu erfolgen, weil davon auszugehen ist, dass sich das Fahrzeug zwischen dem Ausfahren und dem Einfahren der Hubladebühne 10 nicht bewegt hat. Aus Sicherheitsgründen kann aber vor Beginn des Einfahrvorgangs überprüft werden, ob die von den Neigungssensoren 32 und 33 angezeigten Winkelwerte mit den in der Steuerung abgelegten Winkelwerte für die Betriebsposition der Hubladebühne 10 übereinstimmen.

Das Einfahren der Hubladebühne 10 erfolgt in der umgekehrten Reihenfolge wie das Ausfahren. Ein Vergleich der Fig. 4 und 5 verdeutlicht dieses. Demzufolge werden beim Einfahren der Hubladebühne 10 von der Steuerung automatisch die Zwischenausfahrstellungen in umgekehrter Reihenfolge wieder angefahren. Detektiert wird dabei das Erreichen der jeweiligen Zwischeneinfahrstellungen wiederum durch die Neigungssensoren 32 und 33.

Die Erfindung eignet sich nicht nur für die in den Fig. 1 bis 3 gezeigte unterziehbare Hubladebühne 10, sondern auch für unterklapbare Hubladebühnen, die nicht entlang von Schienen 17 unter dem Aufbau 12 des Fahrzeugs horizontal aus- und eingefahren werden müssen. Beim Aus- und Einfahren solcher unterfaltbaren Hubladebühnen entfällt somit das Verfahren der Ladeplattform 13 entlang der Schienen 17. Ansonsten finden die gleichen Bewegungsabläufe zum Ein- und Ausfahren einer solchen Hubladebühne statt, wie sie zuvor im Zusammenhang mit der unterziehbaren Hubladebühne 10 beschrieben worden sind. Insbesondere erfolgt das Ein- und Ausfahren auch der unterfaltbaren Hubladebühne nur durch Betätigung eines Bedienungsorgans, wobei zu Beginn des Ausfahrvorgangs auch ein Nullabgleich der bei einer solchen Hubladebühne ebenfalls vorgesehenen Neigungssensoren 32 und 33 am Lenker 20 und am Hubwerk 14 erfolgt.

### Bezugszeichenliste:

- 10: Hubladebühne
- 11: Hinterrad
- 12: Aufbau
- 13: Ladeplattform
- 14: Hubwerk
- 15: Tragrohr
- 16: Konsole
- 17: Schiene
- 18: Längsholm
- 19: Fahrtrichtung
- 20: Lenker
- 21: Lagerbock
- 22: Parallelogrammlenker
- 23: Hinterkante
- 24: Ladeplattformteil
- 25: Vorderkante
- 26: Ladeplattformteil
- 27: Scharnierachse
- 28: Schwenkarm
- 29: Drehachse
- 30: Rolle
- 31: Kippzylinder
- 32: Neigungssensor
- 33: Neigungssensor
- 34: Zwischenausfahrstellung
- 35: Stellung

## Patentansprüche

1. Verfahren zum Ein- und Ausfahren einer zusammenklappbare Ladeplattformteile (24, 26) aufweisenden Ladeplattform (13) einer Hubladebühne (10), wobei zum Ausfahren der Ladeplattform (13) die zusammengeklappten Ladeplattformteile (24, 26) aus einem rückwärtigen Bereich eines Fahrzeugs herausbewegt werden, die Ladeplattformteile (24, 26) gemeinsam verschwenkt und mindestens ein Ladeplattformteil (26) ausgeklappt wird, sowie die Bewegungsabläufe zum Ein- und Ausfahren der Ladeplattformteile (24, 26) der Ladeplattform (13) automatisch gesteuert werden, **dadurch gekennzeichnet, dass** die aufeinanderfolgenden Bewegungsabläufe beim Ein- und Ausfahren der Ladeplattformteile (24, 26) der Ladeplattform (13) in Abhängigkeit von Winkelsignalen von Neigungssensoren (32, 33) automatisch gesteuert werden und zu Beginn mindestens des Ausfahrvorgangs der Ladeplattform (13) die Winkelsignale der Neigungssensoren (32, 33) ermittelt und in einer Steuerung abgespeichert werden.

2. Verfahren nach Anspruch 1, **dadurch gekennzeichnet, dass** die Bewegungsabläufe in Abhängigkeit von Winkelsignalen zweier Neigungssensoren (32, 33) automatisch gesteuert werden.

3. Verfahren nach Anspruch 1, **dadurch gekennzeichnet, dass** zu Beginn mindestens des Ausfahrvorgangs der Ladeplattform (13) ein Abgleich, insbesondere ein Nullabgleich, des Winkelsignals mindestens eines Neigungssensors (32, 33) vorgenommen wird, wobei vorzugsweise die übrigen in der Steuerung abgespeicherten Winkelsignale auf das mindestens eine abgeglichene Winkelsignal bezogen sind.

4. Verfahren nach Anspruch 1, **dadurch gekennzeichnet, dass** in Abhängigkeit vom vor Beginn des Ausfahrvorgangs abgeglichenen Winkelsignal mindestens eines Neigungssensors (32, 33) die Steuerung das Ausfahren der Ladeplattform (13) derart steuert, dass in der Steuerung abgespeicherte Winkelsignale der Neigungssensoren (32, 33) in einer vorgegebenen Reihenfolge angefahren werden, vorzugsweise getrennt nach Schwenk- und Hubbewegungen der Ladeplattform (13).

5. Hubladebühne zur Anordnung im rückwärtigen Bereich eines Fahrzeugs mit einer aus mehreren zusammenklappbaren Ladeplattformteilen (24, 26) gebildeten Ladeplattform (13), die zwischen einer Ruhestellung und einer Gebrauchsstellung verfahrbar ist, und einem der Ladeplattform (13) zugeordneten Hubwerk (14), das Lenker (20) zur Führung der Bewegung der Ladeplattform (13) aufweist, **dadurch gekennzeichnet, dass** Neigungssensoren (32, 33) dem Hubwerk (14) und der Ladeplattform (13) zugeordnet sind, die der jeweiligen Lage bzw. Stellung des Hubwerks (14) und der Ladeplattform (13) entsprechende Winkelsignale an eine Steuerung zum automatischen Ausfahren der Ladeplattform (13) in die Gebrauchsstellung und zum automatischen Einfahren der Ladeplattform in die Ruhestellung abgeben und zumindest ein Neigungssensor (32, 33) in einer solchen Ausrichtung am Lenker (20) und/oder am hiermit verbundenen Ladeplattformteil (24) angeordnet ist, das in der eingefahrenen Ruhestellung der Ladeplattform (13) und waagerecht ausgerichtetem Fahrzeug mindestens ein Neigungssensor (32, 33) ein bestimmtes Winkelsignal an die Steuerung abgibt.

6. Hubladebühne nach Anspruch 5, **dadurch gekennzeichnet, dass** das bestimmte Winkelsignal einem Winkel von 0° entspricht.

7. Hubladebühne nach Anspruch 5, **dadurch gekennzeichnet, dass** ein Neigungssensor (32) an einem Lenker (20) des Hubwerks (14) und ein weiterer Neigungssensor (33) an einem am Hubwerk (14) angelenkten Ladeplattformteil (24) angeordnet ist.

## Claims

1. Method for retracting and extending a loading platform (13), having foldable loading platform parts (24, 26), of a platform lift (10), wherein, in order to extend the loading platform (13), the foldable loading platform parts (24, 26) are moved out of a rear region of a vehicle, the loading platform parts (24, 26) are pivoted together and at least one loading platform part (26) is folded out, and the movement sequences for retracting and extending the loading platform parts (24, 26) of the loading platform (13) are controlled automatically, **characterized in that** the sequential movement sequences during retracting and extending the loading platform parts (24, 26) of the loading platform (13) are controlled automatically in a manner depending on angle signals from inclination sensors (32, 33), and at the start of at least the extending operation of the loading platform (13), the angle signals from the inclination sensors (32, 33) are determined and saved in a controller.

2. Method according to Claim 1, **characterized in that** the movement sequences are controlled automatically in a manner depending on angle signals from two inclination sensors (32, 33).

3. Method according to Claim 1, **characterized in that**, at the start of at least the extending operation of the loading platform (13), an adjustment, in particular a zero adjustment, of the angle signal from at least one inclination sensor (32, 33) is carried out, wherein, preferably, the other angle signals saved in the controller are related to the at least one adjusted angle signal.

4. Method according to Claim 1, **characterized in that**, depending on the angle signal, adjusted before the start of the extending operation, from the at least one inclination sensor (32, 33), the controlled controls the extending of the loading platform (13) such that angle signals, saved in the controller, from the inclination sensors (32, 33) are approached in a defined order, preferably separately in accordance with pivoting and lifting movements of the loading platform (13).

5. Platform lift for arranging in the rear region of a vehicle, having a loading platform (13) formed from a plurality of foldable loading platform parts (24, 26), said loading platform (13) being movable between a rest position and a use position, and a lifting mechanism (14) assigned to the loading platform (13), said lifting mechanism (14) having links (20) for guiding the movement of the loading platform (13), **characterized in that** inclination sensors (32, 33) are assigned to the lifting mechanism (14) and to the loading platform (13), said inclination sensors (32, 33) outputting angle signals, corresponding to the particular position or situation of the lifting mechanism (14) and of the loading platform (13), to a controlled for automatically extending the loading platform (13) into the use position and for automatically retracting the loading platform into the rest position, and at least one inclination sensor (32, 33) is arranged in such an orientation on the link (20) and/or on the loading platform part (24) connected thereto that, in the retracted rest position of the loading platform (13) and with the vehicle oriented horizontally, at least one inclination sensor (32, 33) outputs a particular angle signal to the controller.

6. Platform lift according to Claim 5, **characterized in that** the particular angle signal corresponds to an angle of 0°.

7. Platform lift according to Claim 5, **characterized in that** one inclination sensor (32) is arranged on a link (20) of the lifting mechanism (14) and a further inclination sensor (33) is arranged on a loading platform part (24) connected to the lifting mechanism (14) in an articulated manner.

## Revendications

1. Procédé pour rentrer et étendre une plateforme de chargement (13) d'un hayon élévateur (10) présentant des parties de plate-forme de chargement rabattables (24, 26), dans lequel pour étendre la plate-forme de chargement (13) on extrait les parties de plate-forme de chargement (24, 26) hors d'une région carrière d'un véhicule on fait pivoter ensemble les parties de plate-forme de chargement (24, 26) et on déploie au moins une partie de plate-forme de chargement (26), et on commande automatiquement l'exécution des mouvements pour rentrer et étendre les parties de plate-forme de chargement (24, 26) de la plate-forme de chargement (13), **caractérisé en ce que** l'on commande automatiquement l'exécution successive des mouvements lors de la rentrée et de l'extension des parties de plate-forme de chargement (24, 26) de la plate-forme de chargement (13) en fonction de signaux d'angle de capteurs d'inclinaison (32, 33) et on détermine au début au moins de l'opération d'extension de la plate-forme de chargement (13) les signaux d'angle des capteurs d'inclinaison (32, 33) et on les mémorise dans une commande.

2. Procédé selon la revendication 1, **caractérisé en ce que** l'on commande automatiquement l'exécution des mouvements en fonction de signaux d'angle de deux capteurs d'inclinaison (32, 33).

3. Procédé selon la revendication 1, **caractérisé en ce qu'**au début au moins de l'opération d'extension de la plate-forme de chargement (13), on opère une compensation, en particulier une compensation de zéro, du signal d'angle d'au moins un capteur d'inclinaison (32, 33), dans lequel les autres signaux d'angle mémorisés dans la commande se réfèrent de préférence audit au moins un signal d'angle compensé.

4. Procédé selon la revendication 1, **caractérisé en ce que** la commande commande l'extension de la plate-forme de chargement (13) en fonction du signal d'angle compensé avant le début de l'opération d'extension d'au moins un capteur d'inclinaison (32, 33), de telle manière que des signaux d'angle des capteurs d'inclinaison (32, 33) mémorisés dans la commande soient activés dans un ordre prédéterminé, de préférence séparément après des mouvements de pivotement et de levage de la plate-forme de chargement (13).

5. Hayon élévateur à agencer dans la région arrière d'un véhicule avec une plate-forme de chargement (13) formée de plusieurs parties de plate-forme de chargement rabattables (24, 26), qui est déplaçable entre une position de repos et une position d'utilisation, et avec un mécanisme de levage (14) associé à la plate-forme de chargement (13), qui présente des bielles (20) pour le guidage du mouvement de la plate-forme de chargement (13), **caractérisé en ce que** des capteurs d'inclinaison (32, 33) sont associés au mécanisme de levage (14) et à la plate-forme de chargement (13), et envoient des signaux d'angle correspondant à la situation ou à la position respective du mécanisme de levage (14) et de la plate-forme de chargement (13) à une commande pour l'extension automatique de la plate-forme de chargement (13) dans la position d'utilisation et pour la rentrée automatique de la plate-forme de chargement dans la position de repos et au moins un capteur d'inclinaison (32, 33) est disposé dans une telle orientation sur la bielle (20) et/ou sur au moins la partie de plate-forme de chargement (24) reliée à celle-ci que dans la position de repos rentrée de la plate-forme de chargement (13) et avec le véhicule orienté horizontalement au moins un capteur d'inclinaison (32, 33) envoie un signal d'angle déterminé à la commande.

6. Hayon élévateur selon la revendication 5, **caractérisé en ce que** le signal d'angle déterminé correspond à un angle de 0°.

7. Hayon élévateur selon la revendication 5, **caractérisé en ce qu'**un capteur d'inclinaison (32) est disposé sur une bielle (20) du mécanisme de levage (14) et un autre capteur d'inclinaison (33) est disposé sur une partie de plate-forme de chargement (24) articulée sur le mécanisme de levage (14).
